(19) Europäisches Patentamt / European Patent Office / Office européen des brevets

(11) **EP 1 744 202 B1**

(12) **FASCICULE DE BREVET EUROPEEN**

(45) Date de publication et mention
de la délivrance du brevet:
**25.02.2009 Bulletin 2009/09**

(51) Int Cl.:
*G02C 7/02* *(2006.01)*  *G02C 7/06* *(2006.01)*

(21) Numéro de dépôt: **06290652.4**

(22) Date de dépôt: **21.04.2006**

(54) **Lentille progressive pour lunettes**

Progressive Brillenlinse

Progressive spectacle lens

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **11.07.2005 FR 0507378**

(43) Date de publication de la demande:
**17.01.2007 Bulletin 2007/03**

(73) Titulaire: **ESSILOR INTERNATIONAL (Compagnie Générale d'Optique) 94227 Charenton Cédex (FR)**

(72) Inventeurs:
• **Guilloux, Cyril,
c/o Essilor International
94227 Charenton-le Pont (FR)**
• **Josso, Hervé,
c/o Essilor International
94227 Charenton-le-Pont (FR)**

(74) Mandataire: **Hirsch & Associés
58, avenue Marceau
75008 Paris (FR)**

(56) Documents cités:

FR-A- 2 769 998    FR-A- 2 769 999
FR-A- 2 809 193    FR-A- 2 820 515
FR-A- 2 820 516    US-A- 6 102 544
US-A1- 2003 156 251

**Description**

La présente invention a pour objet une lentille ophtalmique.

Toute lentille ophtalmique, destinée à être portée dans une monture, est associée à une prescription. La prescription en matière ophtalmique peut comprendre une prescription de puissance, positive ou négative, ainsi qu'une prescription d'astigmatisme. Ces prescriptions correspondent à des corrections à apporter au porteur des lentilles pour corriger les défauts de sa vision. Une lentille est montée dans la monture en fonction de la prescription et de la position des yeux du porteur par rapport à la monture.

Dans les cas les plus simples, la prescription se réduit à une prescription de puissance. La lentille est dite unifocale et présente une symétrie de révolution. Elle est simplement montée dans la monture de sorte que la direction principale du regard du porteur coïncide avec l'axe de symétrie de la lentille.

Pour les porteurs presbytes, la valeur de la correction de puissance est différente en vision de loin et en vision de près, du fait des difficultés d'accommodation en vision de près. La prescription est alors composée d'une valeur de puissance en vision de loin et d'une addition (ou progression de puissance) représentative de l'incrément de puissance entre la vision de loin et la vision de près; ceci revient à une prescription de puissance en vision de loin et à une prescription de puissance en vision de près. Les lentilles adaptées aux porteurs presbytes sont des lentilles multifocales progressives; ces lentilles sont décrites par exemples dans FR-A-2 699 294, US-A-5 270 745 ou US-A-5 272 495, FR-A-2 683 642, FR-A-2 699 294 ou encore FR-A-2 704 327. Les lentilles ophtalmiques multifocales progressives comprennent une zone de vision de loin, une zone de vision de près, une zone de vision intermédiaire, une méridienne principale de progression traversant ces trois zones. Elles sont généralement déterminées par optimisation, à partir d'un certain nombre de contraintes imposées aux différentes caractéristiques de la lentille. Ces lentilles sont généralistes, en ce qu'elles sont adaptées aux différents besoins courants du porteur.

Pour les jeunes presbytes, il a été proposé des lentilles qui ne présentent pas une zone de vision de loin avec un point de référence, à l'inverse des lentilles multifocales progressives classiques; ces lentilles sont décrites dans FR-A-2 588 973. Ces lentilles sont prescrites uniquement en fonction de la puissance nécessaire au porteur en vision de près, indépendamment de la puissance nécessaire au porteur en vision de loin. La lentille offre une partie centrale qui présente une addition de puissance sphérique procurant au porteur une vision de près satisfaisante. Elle présente en outre une légère décroissance de puissance dans la partie supérieure, qui assure au porteur une vision nette aussi au delà du champ habituel de vision de près. Enfin, la lentille présente un point à une valeur de puissance égale à la puissance nominale de vision de près, une zone de puissance plus élevée dans la partie inférieure du verre, et une zone de puissance plus faible dans la partie supérieure du verre.

FR-A-2 769 997 propose une lentille présentant, par rapport à une lentille multifocale progressive classique, une zone de vision de près stabilisée et plus importante, une augmentation significative des largeurs de champs en vision de près et en vision intermédiaire, ainsi qu'une réduction des aberrations et notamment de l'astigmatisme. Elle assure une correction appropriée pour des distances entre 40 et 80 cm et, dans la plupart des cas, pour des distances entre 40 cm et 2 m. Cette lentille est en fait une lentille mi-distance vision de près — vision intermédiaire, privilégiant la vision de près tout en assurant une vision nette au-delà du champ habituel de vision de près. Par contre, aucune vision de loin n'est disponible. Cette lentille s'avère particulièrement bien adaptée au travail sur ordinateur. Elle est prescrite aux jeunes presbytes, uniquement en fonction de la prescription en vision de près. La face arrière de la lentille est usinée pour assurer une puissance en vision de près adaptée à la prescription, sans tenir compte de la prescription en vision de loin. Il suffit de deux faces avant pour couvrir l'ensemble des besoins des porteurs.

FR-A-2 769 999 propose une lentille ophtalmique multifocale progressive présentant une douceur améliorée avec une variation de sphère monotone en fonction de l'angle sur un cercle de rayon 20 mm centré sur le centre géométrique de la lentille de part et d'autre de la méridienne. Cette lentille assure une vision de loin dégagée englobant un secteur angulaire ayant pour origine le centre géométrique de la lentille et un angle au centre supérieur à 150°.

Les lentilles multifocales, qu'elles soient progressives ou dédiées à la vision de près, peuvent comporter une face multifocale complexe (c'est-à-dire n'admettant pas d'axe de révolution, typiquement une surface portant une progression de puissance), par exemple la face opposée au porteur des lunettes, et une face sphérique ou torique, dite face de prescription. Cette face sphérique ou torique permet d'adapter la lentille à l'amétropie de l'utilisateur, de sorte qu'une lentille multifocale n'est généralement définie que par sa surface complexe. On définit pour un produit donné différentes faces complexes, en fonction de l'addition et de la base (ou sphère moyenne en vision de loin). A partir de lentilles semi-finies, dont seule la face multifocale est conformée, il est possible de préparer des lentilles adaptées à chaque porteur, par simple usinage d'une face de prescription sphérique ou torique.

Indépendamment de la prescription de puissance, il peut être proposé à un porteur une prescription d'astigmatisme. Une telle prescription est effectuée par l'ophtalmologiste, en vision de loin, sous la forme d'un couple formé d'une valeur d'axe (en degrés) et d'une valeur d'amplitude (en dioptries). Sur une surface, la valeur d'amplitude représente la différence $1/R_1 - 1/R_2$ entre les courbures principales; la valeur d'axe représente l'orientation, par rapport à un axe de référence et dans un sens de rotation convenu, de la courbure maximale $1/R_1$. En termes de prescription, la valeur d'amplitude représente la différence entre les puissances minimales et maximales dans une direction donnée et l'axe représente l'orientation de 1a puissance maximale. On utilise le terme astigmatisme pour désigner le couple (amplitude, angle); bien qu'il s'agisse d'un abus de langage, on utilise aussi parfois ce terme pour désigner l'amplitude de l'astigmatisme. Le contexte permet à l'homme du métier de comprendre quelle acception est entendue.

L'invention propose une lentille à laquelle il est plus facile de s'adapter que les lentilles ophtalmiques classiques ; elle permet d'assurer au porteur une grande douceur pour une excellente perception en vision périphérique en limitant les valeurs de cylindre tout en garantissant une bonne accessibilité aux puissances nécessaires à la vision de près. Une telle lentille est particulièrement adaptée au confort de porteurs hypermétropes.

L'invention propose en conséquence une lentille ophtalmique présentant une surface complexe ayant un centre géométrique, une croix de montage située 4 mm au dessus du centre géométrique et une méridienne de progression sensiblement ombilique présentant une addition de puissance supérieure ou égale à 1,5 dioptries entre un point de référence en vision de loin et un point de référence en vision de près,
la surface complexe ayant :

- une valeur de cylindre normalisé à l'addition inférieure à 0.8 dans un cercle de rayon 20 mm centré sur le centre géométrique de la lentille;
- un rebond de la quantité sphère normalisée à l'addition sur le cercle de rayon 20 mm centré sur le centre géométrique de la lentille inférieur à 0,04 ;
- une longueur de progression inférieure ou égale à 14 mm, la longueur de progression étant définie comme la distance verticale entre la croix de montage et le point de la méridienne pour lequel la sphère moyenne atteint 85% de la progression de l'addition.

L'invention concerne aussi un équipement visuel comportant au moins une telle lentille et un procédé de correction de la vision d'un sujet presbyte, comprenant la fourniture au sujet ou le port par le sujet d'un tel équipement.

D'autres avantages et caractéristiques de l'invention apparaîtront à la lecture de la description qui suit des modes de réalisation de l'invention, donnés à titre d'exemple et en référence aux dessins qui montrent:

- figure 1, un diagramme des courbures principales et de la sphère sur l'axe d'une lentille selon un premier mode de réalisation de l'invention ;
- figure 2, une carte de sphère moyenne de la lentille de la figure 1;
- figure 3, une carte de cylindre de la lentille de la figure 1;
- figures 4 à 6, des figures similaires aux figures 1 à 3, pour une lentille selon un deuxième mode de réalisation de l'invention ;
- figures 7 à 9, des figures similaires aux figures 1 à 3, pour une lentille selon un troisième mode de réalisation de l'invention ;
- figures 10 à 12, des figures similaires aux figures 1 à 3, pour une lentille selon un quatrième mode de réalisation de l'invention ;
- figure 13 à 16, des représentations graphiques des valeurs de la sphère ramenées à la sphère en vision de loin, le tout normalisé à l'addition sur le cercle de diamètre 40 cm centré sur le centre géométrique de la lentille, en fonction de l'angle, respectivement pour les lentilles des figures 1, 4, 7 et 10.

Dans la suite de la description, on considère, pour la simplicité de l'exposé, le cas d'une lentille présentant une surface complexe et une surface sphérique ou torique. La face complexe de la lentille peut être la face avant (éloignée du porteur), comme cela est le cas pour les lentilles multifocales progressives de l'état de la technique. On considère des lentilles d'un rayon de 30 mm.

De façon connue en soi, en tout point d'une surface complexe, on définit une sphère moyenne D donnée par la formule:

$$D = \frac{n-1}{2}\left(\frac{1}{R_1} + \frac{1}{R_2}\right)$$

où $R_1$ et $R_2$ sont les rayons de courbure maximal et minimal locaux exprimés en mètres, et n l'indice du matériau constituant la lentille.

On définit aussi un cylindre C, donné par la formule:

$$C = (n-1)\left|\frac{1}{R_1} - \frac{1}{R_2}\right|$$

Les caractéristiques de la face complexe de la lentille peuvent être exprimées à l'aide de la sphère moyenne et du cylindre.

L'invention propose une lentille ophtalmique multifocale progressive présentant une grande douceur pour une excellente perception en vision périphérique, avec en outre une bonne accessibilité en vision de près. La lentille permet d'améliorer la vision périphérique en limitant les variations de cylindre dans les zones périphériques de la méridienne. La lentille proposée assure aussi une bonne accessibilité aux puissances nécessaires en vision de près, permettant au porteur de voir de façon satisfaisante à des distances égales à environ 40 cm sans l'obliger à beaucoup abaisser les yeux, la zone de vision de près étant accessible dès 14 mm sous la croix de montage. La lentille est ainsi une lentille particulièrement adaptée aux porteurs hypermétropes qui sont particulièrement sensibles aux distorsions périphériques. La lentille présente une prescription telle que les puissances prescrites au porteur en vision de loin et en vision de près sont atteintes sur la lentille.

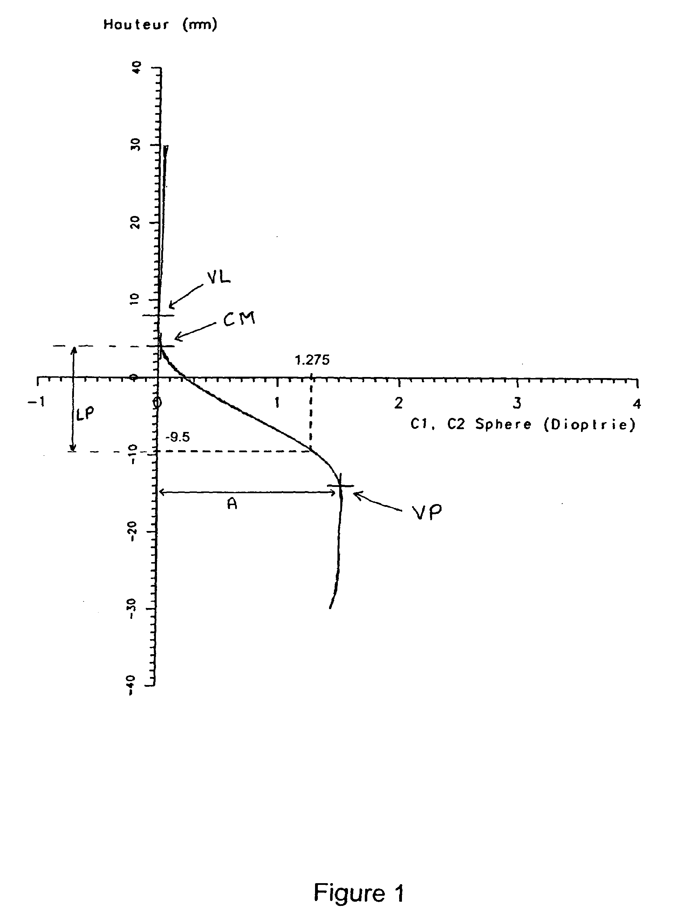

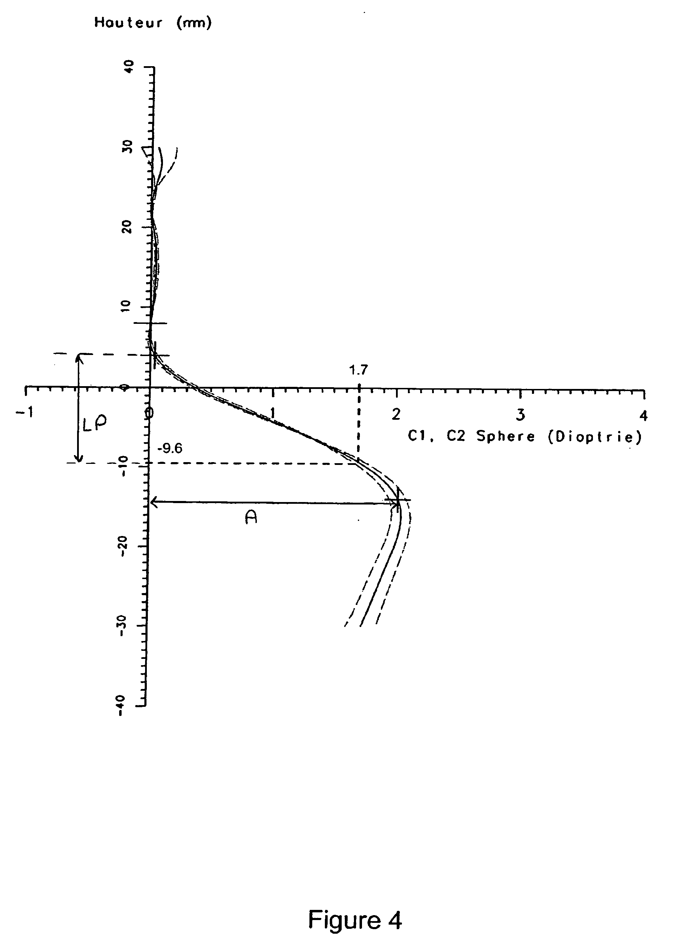

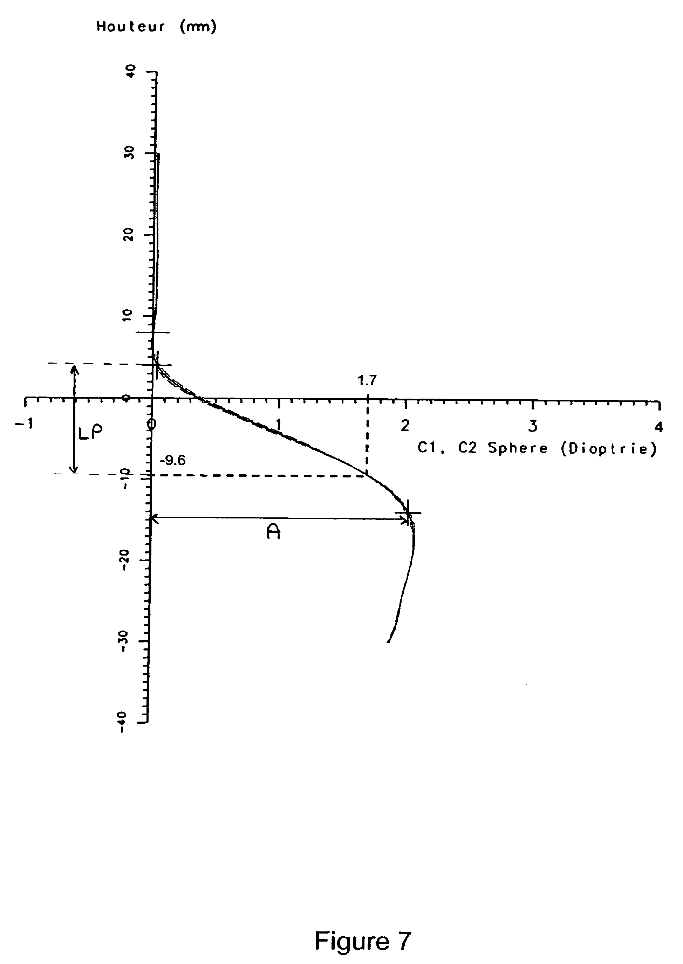

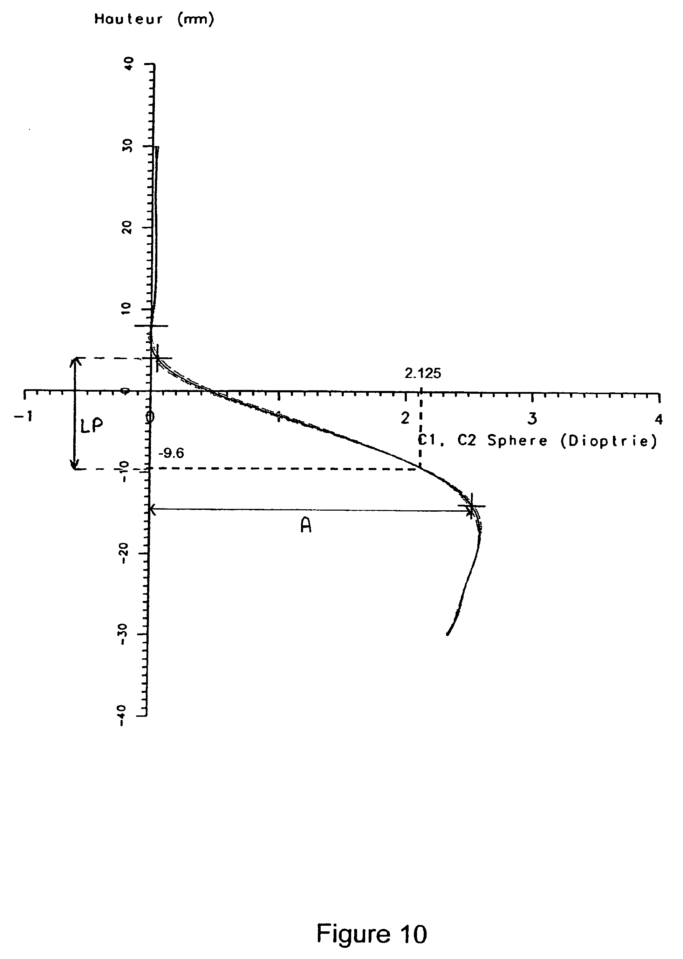

La lentille est décrite dans la suite en référence à quatre modes de réalisation. La lentille du premier mode de réalisation, représentée aux figures 1 à 3, est adaptée à des porteurs hypermétropes presbytes présentant une prescription de progression de puissance de 1,5 dioptries. Les lentilles des deuxième et troisième modes de réalisation, représentées aux figures 4 à 6 et 7 à 9, sont adaptées à des porteurs hypermétropes presbytes présentant une prescription de progression de puissance égale à 2 dioptries. La lentille du deuxième mode de réalisation (figures 4 à 6) tient compte des conditions au porté (asphérisation faisant apparaître du cylindre de construction) dans la modélisation surfacique alors que la lentille du troisième mode de réalisation (figures 7 à 9) n'en tient pas compte. La lentille du quatrième mode de réalisation, représentée aux figures 10 à 12, est adaptée à des porteurs hypermétropes presbytes présentant une prescription de progression de puissance égale à 2,5 dioptries.

Dans les quatre modes de réalisation décrits plus bas, la lentille présente une ligne sensiblement ombilique, dite méridienne, sur laquelle le cylindre est quasiment nul. La méridienne est confondue avec l'axe vertical en partie supérieure de la lentille et présente une inclinaison du côté nasal dans la partie inférieure de la lentille, la convergence étant plus marquée en vision de près.

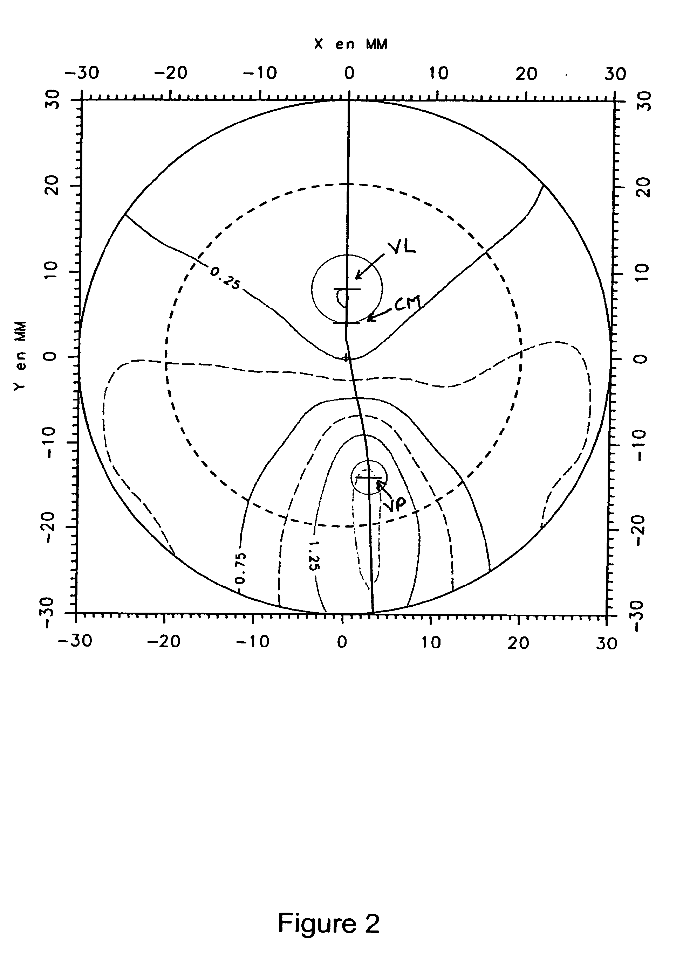

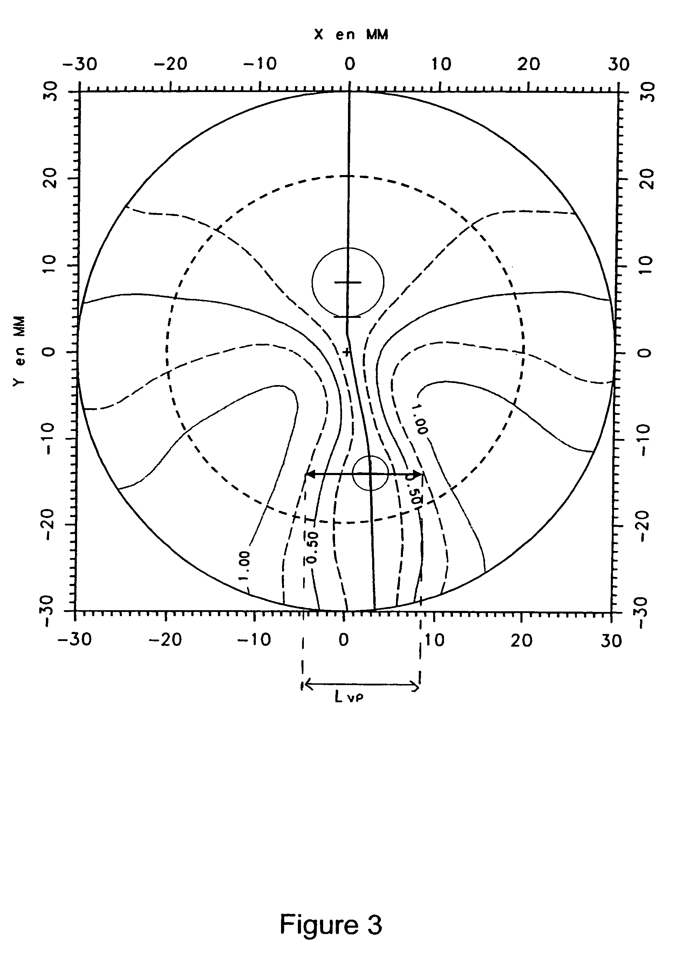

La figure 1 montre un diagramme des courbures principales et de la sphère sur la méridienne d'une lentille selon un premier mode de réalisation de l'invention. Les points sur la surface complexe de la lentille sont repérées sur la figure 1 comme sur les figures 2 et 3 par rapport à un repère orthonormé, ayant pour origine le centre géométrique (0, 0) et dont l'axe des ordonnées est vertical et l'axe des abscisses horizontal. A la figure 1 est portée sur l'axe des abscisses la courbure ou la sphère en dioptries; sur l'axe des ordonnées est repérée la position sur la méridienne de la lentille, en millimètres. La figure 1 montre, à l'ordonnée y = 8 mm, un point de référence en vision de loin VL et, à l'ordonnée y = -14 mm, un point de référence en vision de près VP. La figure montre aussi, à l'ordonnée y = 4 mm, un repère désigné comme la croix de montage CM de la lentille; il s'agit d'un point de centrage matérialisé sur la lentille qui est utilisé par l'opticien pour le montage de la lentille dans la monture. La croix de montage peut être repérée par un point matérialisé sur la lentille, avant montage dans la monture, par une croix ou toute autre marque telle qu'un point entouré d'un cercle tracé sur la lentille, ou par tout autre moyen approprié.

La figure 1 montre en trait plein la sphère moyenne et en traits interrompus les courbures principales $C_1$ = (n-1)/$R_1$ et $C_2$ = (n-1)/$R_2$ sur la méridienne. Les valeurs sont décalées à zéro à l'origine, où la sphère moyenne vaut en réalité 6,58 dioptries. On constate d'abord que le trait plein et les traits interrompus sont confondus — ce qui est représentatif d'un cylindre nul sur la méridienne de la lentille.

On peut ensuite noter que la sphère moyenne sur la méridienne est sensiblement constante sur la moitié supérieure de la lentille. Plus exactement, dans l'exemple de la figure 1, la différence de sphère sur la méridienne, entre la croix de montage CM et le point de référence en vision de loin VL, est sensiblement nulle, égale à 0,02 dioptrie, soit inférieure à 0,06 dioptrie. Cette caractéristique assure que la lentille équivaut, dans sa partie supérieure et sur la méridienne, à un verre unifocal. En d'autres termes, la progression de puissance s'effectue sous la croix de montage CM de la lentille.

La zone de vision intermédiaire commence généralement, pour une lentille multifocale progressive, au niveau de la croix de montage CM, soit 4 mm au-dessus du centre géométrique de la lentille. C'est là que commence la progression de puissance. Ainsi, la sphère moyenne croît, depuis la croix de montage CM jusqu'au point de contrôle en vision de près VP, pour des valeurs de l'ordonnée y entre 4 mm et -14 mm. Pour des ordonnées en dessous de y = -14 mm, la sphère moyenne est sensiblement constante, avec une valeur de l'ordre de 1,5 dioptries égale à l'addition de puissance A. La variation de sphère moyenne sur la méridienne en dessous du point de contrôle en vision de près VP de la lentille est ensuite sensiblement nulle.

On peut donc définir sur la lentille une addition de puissance A; celle-ci correspond soit à la différence de puissance entre deux points de référence haut VL et bas VP pour la vision distante et rapprochée, soit à une différence entre la valeur de puissance sensiblement constante dans la partie inférieure de la lentille, sur la méridienne, et la valeur de puissance sensiblement constante dans la partie supérieure de la lentille, sur la méridienne. Plus généralement, l'addition de puissance peut être définie comme la différence entre les valeurs maximale et minimale de puissance sur la méridienne de la lentille; cette définition s'applique aussi aux sphères moyennes dans l'exemple d'une lentille caractérisée par une surface complexe. Dans l'exemple de la figure 1, cette valeur de l'addition de puissance entre valeurs maximale et minimale est de 1,5 dioptries. On peut encore définir une longueur de progression, désignée LP sur la figure 1, qui est la distance verticale — ou la différence d'ordonnées — entre la croix de montage CM et un point de la méridienne sur lequel la progression de puissance atteint 85% de l'addition de puissance A. En appliquant cette définition à la lentille de la figure 1, une sphère moyenne de 0,85 x 1,5 dioptries, c'est-à-dire de 1,275 dioptries, est atteinte pour un point d'ordonnée y = -9,5 mm environ. La longueur de progression LP, entre la croix de montage CM d'ordonnée y = 4 mm et ce point de la méridienne pour lequel la sphère moyenne atteint 85% de l'addition, est égale à 13,5 mm. L'accessibilité aux puissances nécessaires en vision de près est donc inférieure à 14 mm.

On définit aussi une pente maximum de la variation de la sphère normalisée à l'addition comme le maximum de la valeur absolue de la variation de sphère le long de la méridienne divisée par l'addition. Dans l'exemple de la figure 1, en appliquant cette définition à une lentille caractérisée par une surface complexe, la pente maximum de la sphère normalisée à l'addition le long de la méridienne vaut 0.084 mm$^{-1}$. La pente de la variation de la sphère sur la méridienne est donc assez forte, supérieure à 0,07 mm$^{-1}$; les puissances nécessaires à la vision de près sont donc rapidement atteintes avec une longueur de progression LP raccourcie.

La figure 2 montre une carte de sphère moyenne de la lentille de la figure 1; comme cela est habituel, on a porté à la figure 2, dans un repère orthonormé, les lignes d'isosphère; ces lignes sont formées des points présentant une même valeur de la sphère moyenne. A la figure 2 sont représentées les lignes d'isosphère de 0 dioptrie à 1,5 dioptries avec un pas de 0,25 dioptrie. Une ligne d'isosphère de 0,25 dioptrie traverse la partie supérieure de la lentille en passant proche du centre géométrique (0,0). La valeur de sphère moyenne est donc sensiblement constante dans la partie supérieure de la lentille et autour de la croix de montage. La variation de sphère quasi nulle autour de la croix de montage permet une certaine tolérance de positionnement lors du montage de la lentille dans l'équipement visuel, comme cela sera expliqué plus loin. La ligne d'isosphère 0,5 dioptrie s'étend sensiblement horizontalement entre les ordonnées -3 mm et 1 mm. Les lignes d'isosphère 0,75 dioptrie à 1,5 dioptries sont repérées sur la figure et s'étendent dans la partie inférieure de la lentille, autour de la méridienne.

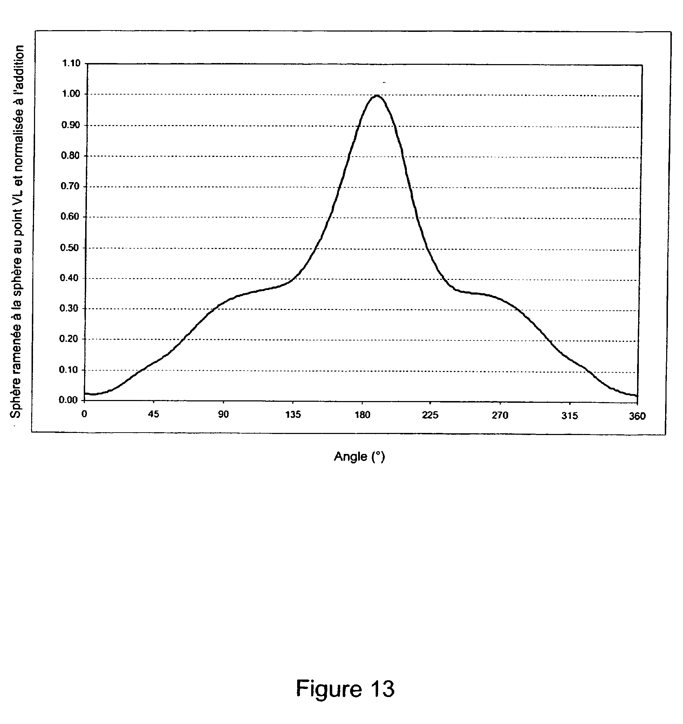

Sur la figure 2, on a aussi représenté un cercle de rayon 20 mm centré au centre géométrique (0,0) de la lentille. Afin d'assurer au porteur un confort visuel maximal, on cherche à maîtriser les variations de la sphère le long de ce cercle ; la vision périphérique du porteur est ainsi améliorée. La maîtrise des variations de la sphère le long de ce cercle implique en l'espèce une limitation du rebond de la quantité sphère normalisée à l'addition. En particulier, le rebond de la variation de la valeur de la sphère le long de ce cercle, divisé par la valeur de l'addition A, est inférieure à 0,04. On définit le rebond de la quantité sphère normalisé à l'addition comme la différence de la valeur de sphère normalisée à l'addition entre deux extremums locaux situés entre le maximum absolu et le minimum absolu. La figure 13, qui sera discutée plus en détails plus bas, représente une courbe de la variation de sphère normalisée à l'addition le long dudit cercle de diamètre 40 mm pour la lentille de la figure 1.

La figure 3 montre une carte de cylindre de la lentille de la figure 1. Sont représentées sur la figure les lignes d'isocylindre de 0,25 dioptrie à 1 dioptrie avec un pas de 0,25 dioptrie. On constate que dans la partie inférieure de la lentille, les lignes d'isocylindre sont quasiment parallèles et verticales et délimitent une zone contenant le point de référence en vision de près VP.

Sur la figure 3, on a également représenté le cercle de rayon 20 mm centré au centre géométrique (0,0) de la lentille. Afin d'assurer une grande douceur de perception visuel au porteur, on cherche aussi à maîtriser les variations de cylindre à l'intérieur de ce cercle ; la vision périphérique du porteur est ainsi améliorée. En particulier, la valeur maximale du cylindre normalisé à l'addition C/A est égale à 0,78 dans ce cercle de rayon 20 mm centré sur le centre géométrique de la lentille, soit inférieure à 0,8.

L'invention propose aussi d'introduire une contrainte sur les positions des lignes d'isocylindre égales à la moitié de l'addition prescrite A/2 dans la partie inférieure de la lentille. En effet, le cylindre est représentatif de l'écart entre la surface locale et une surface sphérique ; il est intéressant qu'il reste faible dans la zone de la lentille utilisée pour la vision, ce qui en termes géométriques revient à "écarter" ou "élargir" les lignes d'isocylindre de la méridienne.

On mesure, au point de référence en vision de près VP, une largeur horizontale $L_{VP}$ entre les lignes d'isocylindre de valeur A/2, qui correspond à la largeur de la zone de vision de près. Cette largeur $L_{VP}$ est la différence des abscisses x des deux points des deux lignes d'isocylindre A/2 dont l'ordonnée est inférieure de 18 mm à celle de la croix de montage CM.

Selon l'invention, la surface complexe de la lentille présente une largeur de zone de vision de près $L_{VP}$ comprise entre 11 mm et 15 mm, ce qui correspond à une zone de vision de près bien dégagée. Dans l'exemple de la figure 3, la lentille présente une largeur de vision de près $L_{VP}$ égale à 13,11 mm.

L'invention propose d'utiliser aussi un critère de largeur relative en vision de près $LR_{VP}$, qui prend en compte l'addition relative sur la méridienne A$_{VP}$, la largeur de la zone de vision de près L$_{VP}$ (largeur horizontale à l'isocylindre A/2), et la valeur maximale du cylindre C$_{VP}$ en dehors de la zone de vision de près. Ce critère de largeur relative est défini à une ordonnée donnée, à 18 mm sous la croix de montage CM. Dans les exemples, cette ordonnée correspond au point de référence en vision de près VP.

On définit l'addition relative A$_{VP}$ comme la différence entre la sphère moyenne sur la méridienne principale de progression au point de référence en vision de près VP et la croix de montage CM.

On peut aussi mesurer le cylindre maximum C$_{VP}$ sur un segment horizontal comprenant tous les points d'ordonnée y = -14 mm (18 mm sous la croix de montage) dont la distance au centre géométrique est inférieure à 20 mm; en terme d'abscisses, on considère donc les points dont l'abscisse x est en module inférieur à □ ($20^2$-$14^2$)= 14,3 mm. Autrement dit, on considère le cylindre maximum, à 18 mm sous la croix de montage, dans toute 1a largeur utile de la lentille, même au delà de la limite de la zone de vision de près.

On définit alors la largeur relative en vision de près LR$_{VP}$ comme suit:

$$LR_{VP} = L_{VP}·(A_{VP}/C_{VP})$$

Cette largeur relative est représentative non seulement de la largeur de la zone de vision de près L$_{VP}$, mais aussi de la douceur de la lentille en dehors de celle-ci, à 18 mm sous la croix de montage CM.

Selon l'invention, la zone de vision de près est définie de sorte à maximiser la valeur de la largeur relative en vision de près LR$_{VP}$; avantageusement, elle est supérieure à une valeur de l'ordre de 15 mm, et ce pour toutes les additions. On détermine les isocylindres A/2 sans la zone de vision de près de sorte à satisfaire à cette condition. Dans l'exemple de la figure 3, la largeur relative en vision de près LR$_{VP}$ est égale à 17,12 mm.

L'invention propose en outre de minimiser en chaque point utile de la lentille, le produit de la pente de sphère par le cylindre. Cette quantité est représentative des aberrations de la lentille : elle est manifestement nulle pour une lentille sphérique. La pente de sphère est représentative des variations locales de la sphère, et est d'autant plus faible que la lentille est "douce", i. e. présente une progression qui n'est pas trop brutale. Il est toutefois nécessaire pour assurer une progression que la pente de sphère ne présente pas des valeurs non nulles sur toute la lentille, et notamment sur la méridienne principale de progression.

Le produit de la pente de sphère par le cylindre représente un équilibre entre le contrôle des pentes de sphère, et la volonté d'élargir les isocylindres. Pour une lentille dans laquelle le maximum de pente de sphère se trouverait sur la méridienne et dans laquelle la méridienne serait une ligne ombilique, le produit serait nul sur la méridienne, et présenterait une valeur faible autour de celle-ci. En s'éloignant de la méridienne, les valeurs de cylindre peuvent augmenter, mais le produit peut rester faible si la pente de sphère est elle-même faible : ceci est préférable dans les zones éloignées de la méridienne, puisque la progression de sphère n'est en fait fonctionnelle que dans le couloir de progression autour de la méridienne. Autrement dit, imposer une limite au produit de la pente de sphère par le cylindre sur la surface de la lentille implique de minimiser le cylindre dans la région fovéale, tout en minimisant la pente de sphère dans la région extra-fovéale. On assure à la fois une bonne vision fovéale, et une bonne vision périphérique. Le produit de la pente de sphère par le cylindre est donc une quantité représentative des aberrations sur la surface de la lentille.

L'invention propose de minimiser ce produit sur la surface de la lentille à l'intérieur d'un cercle de rayon de 20 mm autour du centre de la lentille ; ceci revient à exclure les zones de bord de la lentille, qui ne sont que peu ou pas utilisées par le porteur, surtout dans le cas de montures de petites dimensions.

A cet effet, l'invention propose d'introduire le critère d'un rapport entre l'intégrale du produit du cylindre par la norme du gradient de la sphère, sur le cercle de rayon 20 mm centré sur le centre de la lentille, d'une part et le produit de l'aire de ce cercle, de l'addition et de la valeur maximale de la norme du gradient de la sphère sur la partie de la méridienne comprise dans ce cercle, d'autre part, inférieur à 0,14. Pour la lentille de la figure 3, ce critère vaut 0,11.

Les figures 4 à 6 sont des vues similaires à celles des figures 1 à 3, mais pour une lentille présentant une addition de puissance de 2 dioptries sur la surface complexe.

On retrouve sur la figure 4 les caractéristiques déjà mises en évidence à la figure 1 - à ceci près que la progression de sphère moyenne sur la méridienne est de l'ordre de 2 dioptries et non plus de 1,5 dioptrie. Les valeurs sont décalées à zéro à l'origine, où la sphère moyenne vaut en réalité 6,58 dioptries. En particulier, dans l'exemple de la figure 4 on constate d'abord que le trait plein (la sphère) et les traits interrompus (les courbures principales) ne sont pas confondus — ce qui est représentatif d'un cylindre non nul sur la méridienne de la lentille. En effet, dans l'exemple de la figure 4, du cylindre de construction a été introduit pour compenser les aberrations optiques engendrées par la lentille positionnée dans les conditions au porté et qui peuvent être simulées par tracé de rayon et analysées en puissance porteur et astigmatisme.

La variation de sphère moyenne sur la méridienne dans la partie supérieure de la lentille, entre la croix de montage CM et le point de référence en vision de loin VL, est égale à 0,04 dioptrie ; et la variation de sphère moyenne sur la méridienne en dessous du point de référence en vision de près VP décroît légèrement afin de compenser les variations de puissance engendrés par les conditions réelles au porté.

On a aussi représenté sur la figure 4 la longueur de progression LP. Dans l'exemple de la figure 4, en appliquant la définition donnée en référence à la figure 1, une sphère moyenne de 0,85 x 2 dioptrie, c'est-à-dire de 1,70 dioptries est atteinte pour un point d'ordonnée y = -9,6 mm environ. La longueur de progression LP, entre la croix de montage CM d'ordonnée y = 4 mm et ce point de la méridienne pour lequel la sphère moyenne atteint 85% de l'addition, est égale à 13,6 mm. L'accessibilité aux puissances nécessaires en vision de près est donc inférieure à 14 mm. Par ailleurs, dans l'exemple de la figure 4 en appliquant la définition donnée en référence à la figure 1, la pente maximum de variation de sphère normalisée à l'addition est égale à 0.082 mm$^{-1}$. Elle donc supérieure à 0,07 mm$^{-1}$.

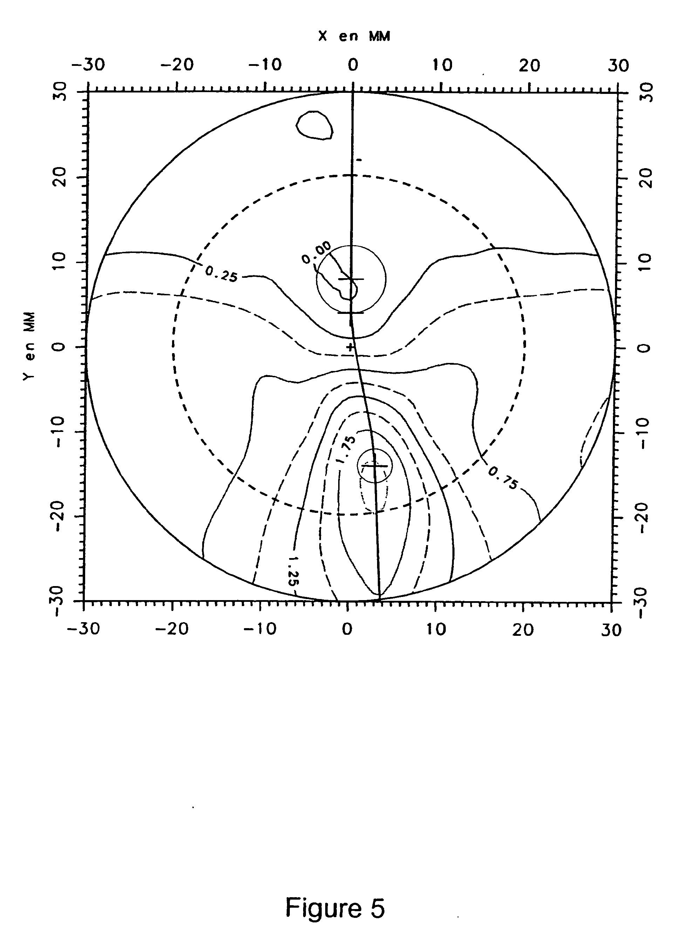

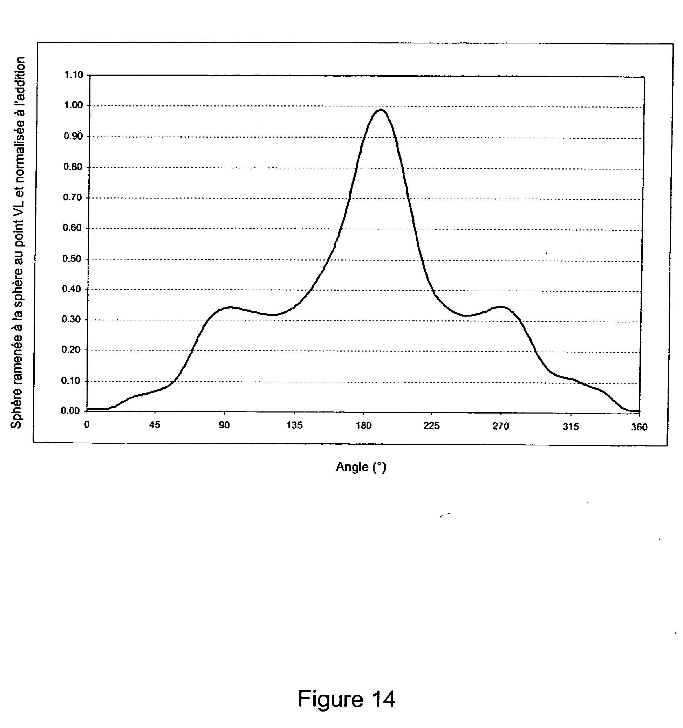

La figure 5 montre les lignes d'isosphère de 0 à 2 dioptries, avec un pas de 0,25 dioptrie. Comme sur la figure 2, on a représenté un cercle de rayon 20 mm centré sur le centre géométrique de la lentille. Le rebond de la variation de la valeur de la sphère le long de ce cercle, divisée par la valeur de l'addition A, est inférieur à 0,04. La figure 14, qui sera décrite plus loin, représente une courbe de la variation de sphère normalisée à l'addition le long de ce cercle pour cette lentille présentant une addition de puissance de 2 dioptries sur la surface complexe.

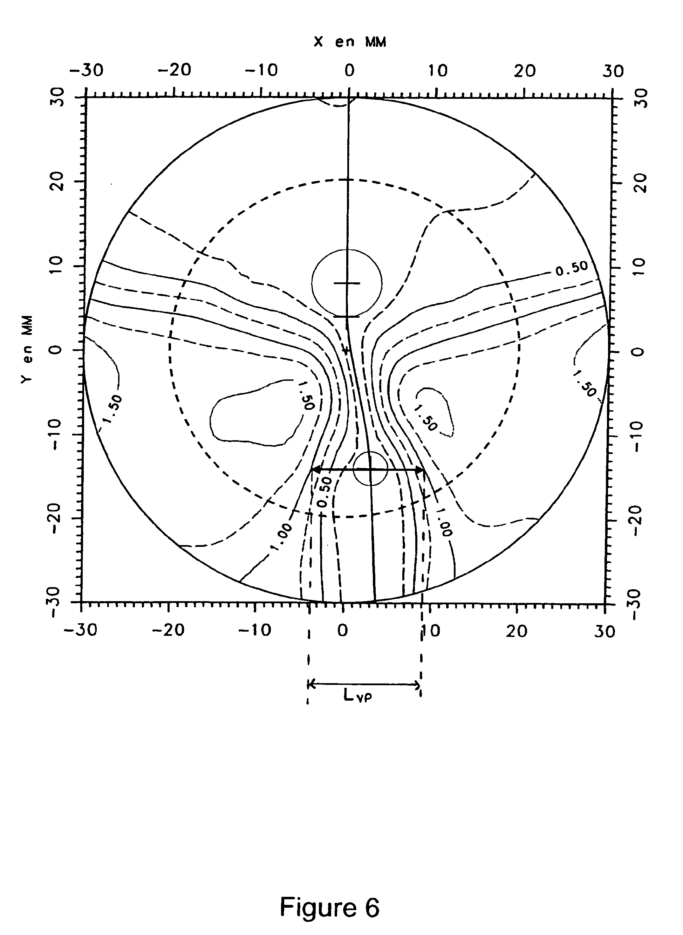

La figure 6 montre les lignes d'isocylindre de 0,25 à 1,5 dioptries, avec un pas de 0,25 dioptries. Comme à la figure 3, on constate que dans la partie inférieure de la lentille, les lignes d'isocylindre sont quasiment parallèles et verticales et délimitent une zone contenant le point de référence en vision de près VP. On a aussi représenté sur la figure 6 la largeur de vision de près L$_{VP;}$ selon les définitions données en référence à la figure 3, la largeur de vision de près L$_{VP}$ est égale à 13,02 mm et la largeur relative en vision de près LR$_{VP}$ est égale à 17,72 mm.

On a également représenté le cercle de rayon 20 mm centré au centre géométrique (0,0) de la lentille et on constate que la valeur du cylindre normalisé à l'addition C/A est inférieure à 0.8 dans ce cercle. On mesure une valeur maximale de cylindre normalisée à l'addition égale à 0,78.

En outre, la lentille de la figure 6 répond aussi au critère d'un rapport entre l'intégrale du produit du cylindre par la norme du gradient de la sphère, sur le cercle de rayon 20 mm centré sur le centre de la lentille, d'une part et le produit de l'aire de ce cercle, de l'addition et de la valeur maximale de la norme du gradient de la sphère sur la partie de la méridienne comprise dans ce cercle, d'autre part, inférieur à 0,14. Pour la lentille de la figure 6, la valeur mesurée pour ce rapport est de 0,12.

Les figures 7 à 9 sont des vues similaires à celles des figures 4 à 6, mais sans prise en compte particulière des conditions au porté.

On retrouve sur la figure 7 les caractéristiques déjà mises en évidence à la figure 1 — à ceci près que la progression de sphère moyenne sur la méridienne est de l'ordre de 2 dioptries et non plus de 1,5 dioptrie. La sphère moyenne à l'origine est de 6,57 dioptries. La variation de sphère moyenne sur la méridienne dans la partie supérieure de la lentille, entre la croix de montage CM et le point de référence en vision de loin VL, est égale à 0,04 dioptrie ; et la variation de sphère moyenne sur la méridienne en dessous du point de référence en vision de près VP décroît légèrement.

On a aussi représenté sur la figure 7 la longueur de progression LP. Dans l'exemple de la figure 7, en appliquant la définition donnée en référence à la figure 1, une sphère moyenne de 0,85 x 2 dioptrie, c'est-à-dire de 1,70 dioptries est atteinte pour un point d'ordonnée y = -9,6 mm environ. La longueur de progression LP, entre la croix de montage CM d'ordonnée y = 4 mm et ce point de la méridienne pour lequel la sphère moyenne atteint 85% de l'addition, est égale à 13,6 mm. L'accessibilité aux puissances nécessaires en vision de près est donc inférieure à 14 mm. Par ailleurs, dans l'exemple de la figure 7 et en appliquant la définition donnée en référence à la figure 1, la pente maximum de variation de sphère normalisée à l'addition est égale à 0.078 mm$^{-1}$; elle donc supérieure à 0,07 mm$^{-1}$.

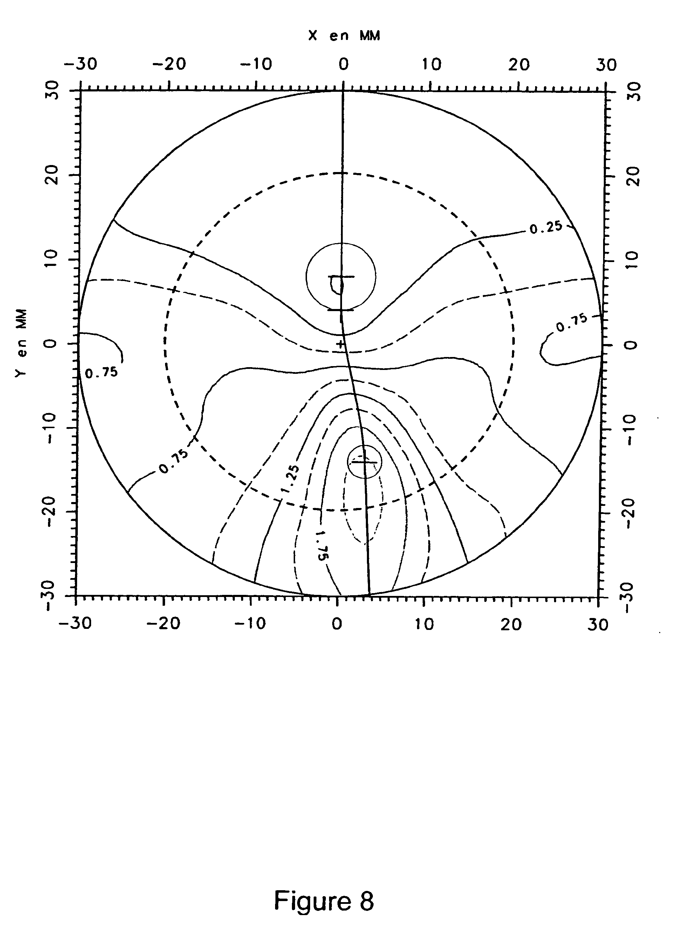

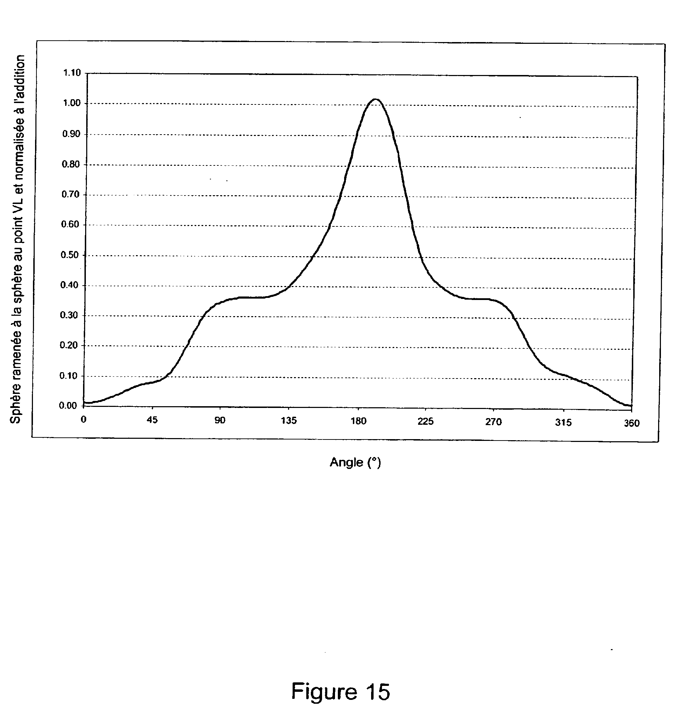

La figure 8 montre les lignes d'isosphère de 0 à 2 dioptries, avec un pas de 0,25 dioptrie. Comme sur la figure 2, on a représenté un cercle de rayon 20 mm centré sur le centre géométrique de la lentille. Le rebond de la variation de la valeur de la sphère le long de ce cercle, divisée par la valeur de l'addition A, est inférieur à 0,04. La figure 15, qui sera décrite plus loin, représente une courbe de la variation de sphère normalisée à l'addition le long de ce cercle pour cette lentille présentant une addition de puissance de 2 dioptries sur la surface complexe.

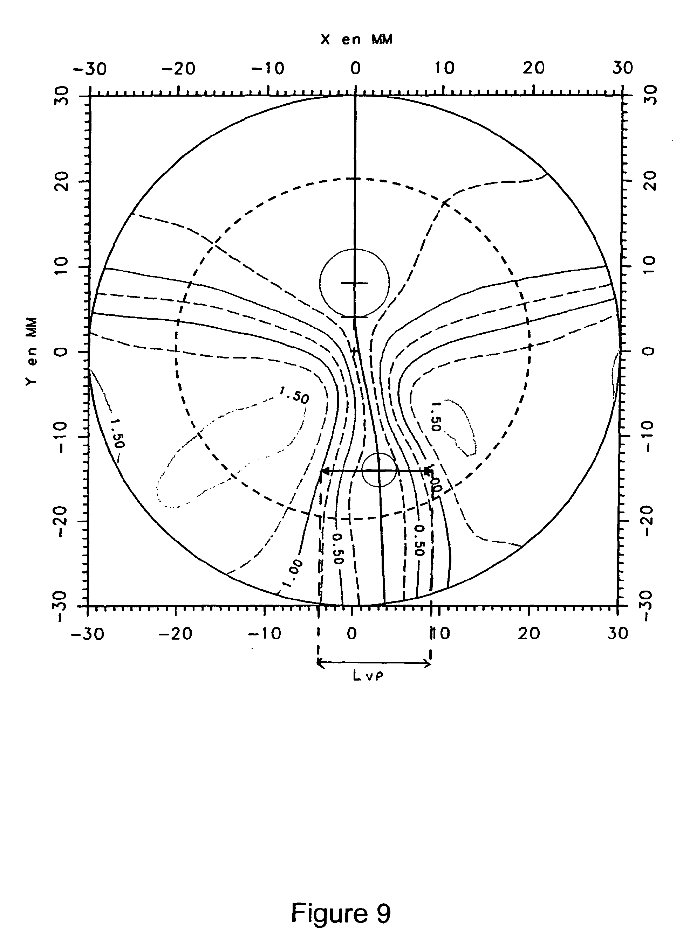

La figure 9 montre les lignes d'isocylindre de 0,25 à 1,5 dioptries, avec un pas de 0,25 dioptries. Comme sur les figures 3 et 6, on constate que dans la partie inférieure de la lentille, les lignes d'isocylindre sont quasiment parallèles et verticales et délimitent une zone contenant le point de référence en vision de près VP. On a aussi représenté sur la figure 9 la largeur de vision de près L$_{VP;}$ selon les définitions données en référence à la figure 3, la largeur de vision de près L$_{VP}$ est égale à 12,6 mm et la largeur relative en vision de près LR$_{VP}$ est égale à 16,65 mm.

On a également représenté le cercle de rayon 20 mm centré au centre géométrique (0,0) de la lentille et on constate que la valeur du cylindre normalisé à l'addition C/A est inférieure à 0.8 dans ce cercle. On mesure une valeur maximale de cylindre normalisée à l'addition égale à 0,76.

En outre, la lentille de la figure 9 répond aussi au critère d'un rapport entre l'intégrale du produit du cylindre par la norme du gradient de la sphère, sur le cercle de rayon 20 mm centré sur le centre de la lentille, d'une part et le produit de l'aire de ce cercle, de l'addition et de la valeur maximale de la norme du gradient de la sphère sur la partie de la méridienne comprise dans ce cercle, d'autre part, inférieur à 0,14. Pour la lentille de la figure 9, ce critère vaut 0,12.

Les figures 10 à 12 sont des vues similaires à celles des figures 1 à 3, mais pour une lentille présentant une addition de puissance de 2,5 dioptries sur la surface complexe.

On retrouve sur la figure 10 les caractéristiques déjà mises en évidence à la figure 1 — à ceci près que la progression de sphère moyenne sur la méridienne est de l'ordre de 2,5 dioptries et non plus de 1,5 dioptrie. La sphère moyenne à l'origine est de 6,55 dioptries. La variation de sphère moyenne sur la méridienne dans la partie supérieure de la lentille, entre la croix de montage CM et le point de référence en vision de loin VL, est égale à 0,05 dioptrie ; et la variation de sphère moyenne sur la méridienne en dessous du point de référence en vision de près décroît légèrement.

On a aussi représenté sur la figure 10 la longueur de progression LP. Dans l'exemple de la figure 7, en appliquant la définition donnée en référence à la figure 1, une sphère moyenne de 0,85 x 2,5 dioptrie, c'est-à-dire de 2,125 dioptries est atteinte pour un point d'ordonnée y = -9,6 mm environ. La longueur de progression LP, entre la croix de montage CM d'ordonnée y = 4 mm et ce point de la méridienne pour lequel la sphère moyenne atteint 85% de l'addition, est égale à 13,6 mm. L'accessibilité aux puissances nécessaires en vision de près est donc inférieure à 14 mm. Par ailleurs, dans l'exemple de la figure 7 et en appliquant la définition donnée en référence à la figure 1, la pente maximum de variation de sphère normalisée à l'addition est égale à 0.078 mm$^{-1}$; elle donc supérieure à 0,07 mm$^{-1}$.

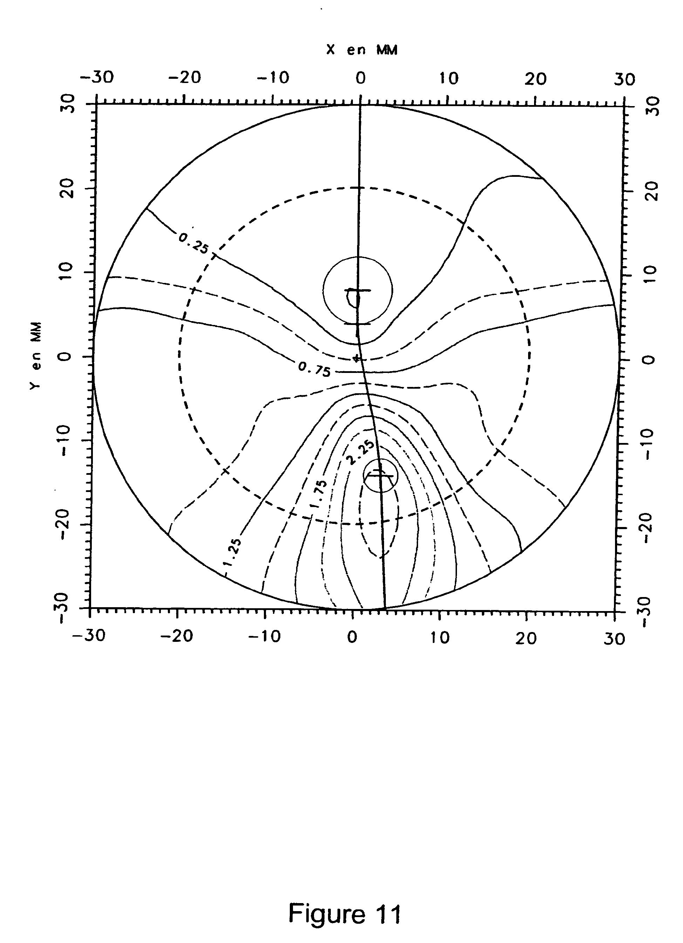

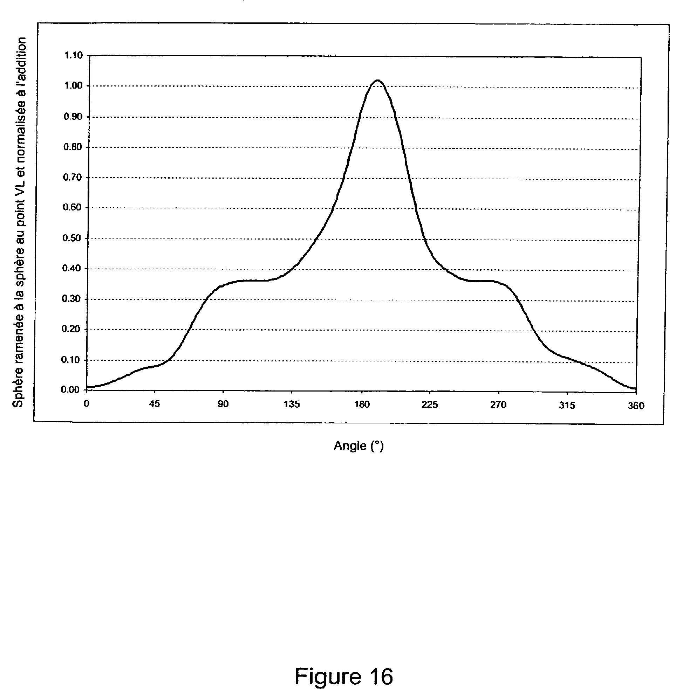

La figure 11 montre les lignes d'isosphère de 0 à 2,5 dioptries, avec un pas de 0,25 dioptrie. Comme sur la figure 2, on a représenté un cercle de rayon 20 mm centré sur le centre géométrique de la lentille. Le rebond de la variation de la valeur de la sphère le long de ce cercle, divisée par la valeur de l'addition A, est inférieur à 0,04. La figure 16, qui sera décrite plus loin, représente une courbe de la variation de sphère normalisée à l'addition le long de ce cercle pour cette lentille présentant une addition de puissance de 2,5 dioptries sur la surface complexe.

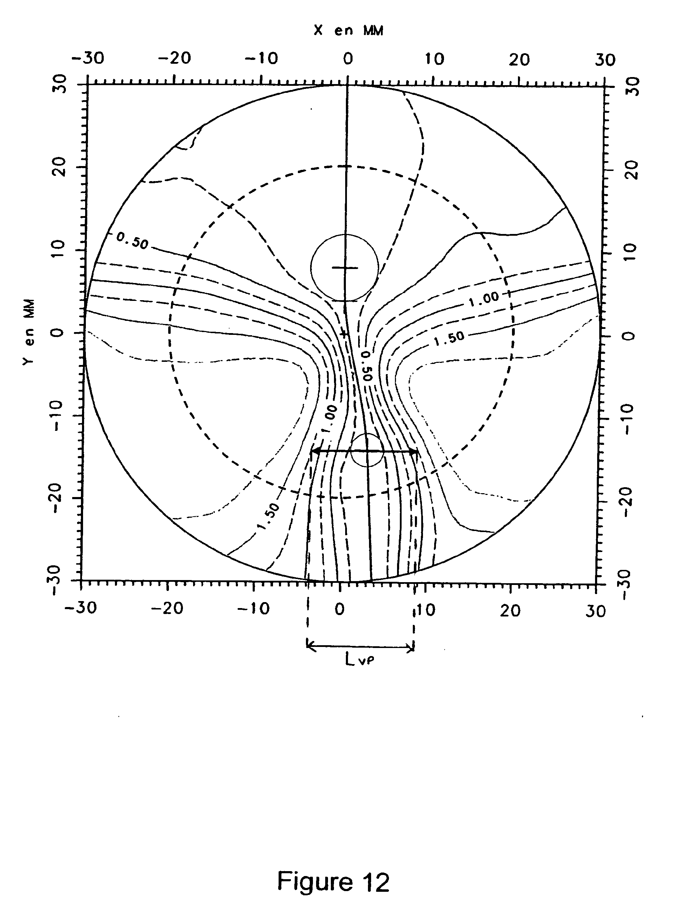

La figure 12 montre les lignes d'isocylindre de 0,25 à 1,75 dioptries, avec un pas de 0,25 dioptries. Comme sur les figures 3, 6 et 9, on constate que dans la partie inférieure de la lentille, les lignes d'isocylindre sont quasiment parallèles et verticales et délimitent une zone contenant le point de référence en vision de près VP. On a aussi représenté sur la figure 12 la largeur de vision de près $L_{VP}$; selon les définitions données en référence à la figure 3, la largeur de vision de près $L_{VP}$ est égale à 12,61 mm et la largeur relative en vision de près $LR_{VP}$ est égale à 16,64 mm.

On a également représenté le cercle de rayon 20 mm centré au centre géométrique (0,0) de la lentille et on constate que la valeur du cylindre normalisé à l'addition C/A est inférieure à 0.8 dans ce cercle. On mesure une valeur maximale de cylindre normalisée à l'addition égale à 0,76.

En outre, la lentille de la figure 12 répond aussi au critère d'un rapport entre l'intégrale du produit du cylindre par la norme du gradient de la sphère, sur le cercle de rayon 20 mm centré sur le centre de la lentille, d'une part et le produit de l'aire de ce cercle, de l'addition et de la valeur maximale de la norme du gradient de la sphère sur la partie de la méridienne comprise dans ce cercle, d'autre part, inférieur à 0,14. Pour la lentille de la figure 12, la valeur de ce rapport est de 0,12.

Les figures 13 à 16 montrent la variation de la sphère moyenne sur le cercle de diamètre 40 mm centré sur le centré géométrique de la lentille, pour les différentes lentilles décrites ci-dessus. Les ordonnées sont graduées sans unités puisque les valeurs sont exprimées en valeurs de sphère (dioptrie) normalisée à l'addition (dioptrie). Les abscisses représentent l'angle □ dans un système de coordonnées polaires dont le centre est le centre géométrique de la lentille et dont les angles sont mesurés à partir de la demi-droite verticale dirigée vers le haut.

Les figures 13 à 16 montrent que la valeur de la sphère augmente lorsque l'on se déplace sur le cercle depuis un point d'intersection du cercle avec la méridienne vers l'autre point d'intersection du cercle avec la méridienne pour atteindre un maximum absolu, puis la valeur de la sphère diminue lorsque l'on se déplace sur le cercle pour revenir vers le premier point d'intersection du cercle avec la méridienne pour définir un minimum absolu.

Le maximum absolu de la sphère normalisée à l'addition est atteint pour le point correspond à l'intersection du cercle avec la méridienne dans la partie inférieure de la lentille (zone de vision de près). Chaque courbe de la variation de sphère normalisée à l'addition présente deux rebonds de part et d'autre du maximum absolu. Chaque rebond constitue une rupture de la variation monotone de la sphère. Cependant, selon l'invention, l'évolution de la sphère sur le cercle de rayon 20 mm centré sur le centre géométrique de la lentille présente des rebonds de très faible amplitude lorsque l'on se déplace sur le cercle depuis un point d'intersection du cercle avec la méridienne vers l'autre point d'intersection du cercle avec la méridienne ; ce faible rebond de la sphère sur le cercle, de part et d'autre de la méridienne, assure une variation douce et uniforme des caractéristiques optiques de la lentille et assure une plus grande facilité d'adaptation du porteur aux lentilles.

On constate sur la figure 14 que le rebond le plus important, tout en restant relativement faible, apparaît pour la courbe correspondant à la lentille des figures 3 à 6. Dans cet exemple, les contraintes imposées à la lentille sont différentes, d'une part pour introduire du cylindre de construction afin de compenser les aberrations optiques constatées lors du porté et d'autre part pour privilégier les largeurs en vision de près ($L_{VP}$ et $LR_{VP}$). Le compromis entre la largeur de la zone de vision de près et la vision périphérique a été choisi ici plus en faveur de la vision de prés au détriment des variations de sphère périphériques.

Le tableau récapitulatif ci-dessous montre les valeurs caractéristiques des lentilles selon l'invention pour différentes valeurs d'addition.

Dans le tableau, on a reporté pour différentes valeurs d'addition, la longueur de progression LP ; la pente maximale $P_{max}$ de la variation de la sphère normalisée à l'addition sur la méridienne ; le rebond maximal de la quantité sphère normalisée à l'addition sur le cercle de rayon 20 mm centré sur le centre géométrique de la lentille ; le cylindre maximum $C_{max}$ normalisé à l'addition dans ledit cercle ; la différence de sphère moyenne sur la méridienne entre la croix de montage du verre et le point de contrôle en vision de loin ; la largeur de la zone de vision de près $L_{VP}$ ; la largeur normalisée de la zone de vision de prés $LR_{VP}$ ; et le rapport R entre l'intégrale du produit du cylindre par la norme du gradient de la sphère, sur le cercle de rayon 20 mm centré sur le centre de la lentille, d'une part et le produit de l'aire de ce cercle, de l'addition et de la valeur maximale de la norme du gradient de la sphère sur la partie de la méridienne comprise dans ce cercle, d'autre part.

| Add (D.) | LP (mm) | $P_{max}$ (mm$^{-1}$) | Rebond normalisé | $C_{max}$ normalisé | $Sph_{CM}$-$Sph_{VL}$ (D.) | $L_{VP}$ (mm) | $LR_{VP}$ (mm) | R |
|---|---|---|---|---|---|---|---|---|
| 1,50 | 13,5 | 0,084 | 0,002 | 0,78 | 0,02 | 13,11 | 17,12 | 0,11 |
| 2,00 A | 13,6 | 0,082 | 0,030 | 0,78 | 0,04 | 13,02 | 17,72 | 0,12 |
| 2,00 B | 13,6 | 0,078 | 0,001 | 0,76 | 0,04 | 12,60 | 16,65 | 0,12 |
| 2,50 | 13,6 | 0,078 | 0,001 | 0,76 | 0,05 | 12,61 | 16,64 | 0,12 |

Les figures 1 à 16 illustrent quatre modes de réalisation de lentilles selon l'invention. Ces figures montrent bien que la lentille présente une bonne accessibilité aux puissances nécessaires en vision de près, la zone de vision de près étant accessible dès 14 mm sous la croix de montage, et une douceur améliorée dans les zones périphériques de part et d'autre de la méridienne, avec un maximum de cylindre normalisé dans la zone utile de la lentille et un rebond de la sphère normalisée à l'addition sur le cercle de diamètre 40 mm centré sur la lentille minimisé.

La lentille selon l'invention se prescrit en considérant les prescriptions porteur en vision de loin et en vision de près ce qui détermine l'addition nécessaire. La puissance nécessaire peut être obtenue, comme dans l'état de la technique, par usinage d'une face arrière pour assurer que la puissance est identique à la puissance prescrite.

Le montage de la lentille dans un équipement visuel peut se faire de la manière suivante. La position horizontale de la pupille du porteur en vision de loin est mesurée, soit le demi-écart pupillaire uniquement, et la hauteur totale du calibre de la monture de l'équipement visuel est déterminée. La lentille est alors montée dans l'équipement visuel avec la croix de montage positionnée à la position mesurée.

On peut se référer sur ce point à la demande de brevet FR-A-2 807 169 décrivant un procédé de montage simplifié de lentilles ophtalmiques dans une monture. Ce document décrit en particulier les différentes mesures prises par les opticiens et propose de ne mesurer que le demi-écart pupillaire pour effectuer le montage des verres dans la monture en utilisant la hauteur totale du calibre de la monture.

Le montage de la lentille ne nécessite donc qu'une mesure classique du demi-écart pupillaire de vision de loin, ainsi qu'une mesure de la hauteur du calibre de la monture, pour déterminer la hauteur à laquelle doit être placé la croix de montage dans la monture. Le montage de la lentille dans la monture s'effectue simplement en mesurant la position dans la monture du regard du sujet en vision de loin; cette mesure s'effectue de façon classique, le sujet portant la monture et regardant à l'infini. On détoure en suite 1a lentille et on la monte dans la monture, de sorte que la croix de montage se trouve à la position mesurée.

La lentille selon l'invention permet une tolérance améliorée au montage décrit ci-dessus. Cette tolérance est apportée par une valeur de la sphère sensiblement constante autour de la croix de montage. En particulier, la différence de sphère moyenne sur la méridienne entre la croix de montage du verre et le point de contrôle en vision de loin est inférieure à 0,06 dioptrie.

La lentille des exemples décrits plus haut peut être obtenue par optimisation d'une surface suivant des méthodes d'optimisations connues en soi et décrites dans les documents de l'état de la technique cités plus haut relatifs aux lentilles multifocales progressives. On peut utiliser pour l'optimisation un ou plusieurs des critères exposés dans la description qui précède en référence aux figures 1 à 16, et notamment :

- une progression de sphère moyenne sur la méridienne de 1,5 dioptrie ou plus;
- une longueur de progression inférieure ou égale à 14 mm ;
- une valeur de cylindre normalisé à l'addition inférieure à 0.8 dans un cercle de rayon 20 mm centré sur le centre géométrique de la lentille;
- un rebond de la quantité sphère normalisée à l'addition sur ce cercle inférieur à 0,04 ;

Ces critères peuvent être combinés à d'autres, notamment à un ou plusieurs des critères proposés dans les exemples précédents. On peut ainsi utiliser un ou plusieurs des critères suivants:

- une différence de sphère moyenne sur la méridienne, entre la croix de montage du verre et le point de référence en vision de loin, inférieure ou égale à 0,06 dioptries ;
- une pente maximale de la variation de la sphère normalisée à l'addition sur la méridienne de progression supérieure à 0,07 mm$^{-1}$;
- une largeur de vision de près comprise entre 11 mm et 15 mm;
- une largeur relative de vision de près définie supérieure à 15 mm;
- un rapport entre l'intégrale du produit du cylindre par la norme du gradient de la sphère, sur le cercle de rayon 20 mm centré sur le centre de la lentille, d'une part et le produit de l'aire de ce cercle, de l'addition et de la valeur maximale de la norme du gradient de la sphère sur la partie de la méridienne comprise dans ce cercle, d'autre part, inférieur à 0,14.

Le choix de ces critères permet d'obtenir, par optimisation, une lentille. L'homme du métier comprend aisément que la lentille en cause ne présente pas nécessairement des valeurs correspondant exactement aux critères imposés; par exemple, il n'est pas indispensable que la valeur supérieure de la variation de sphère moyenne soit atteinte.

Dans les exemples d'optimisation ci-dessus, on a proposé d'optimiser une seule des faces des lentilles. Il est clair que dans tous ces exemples, on peut échanger facilement le rôle des surfaces avant et arrière. On peut aussi répartir indifféremment la progression de sphère sur l'une ou l'autre des deux surfaces de la lentille, ou partiellement sur une face et l'autre, du moment que des cibles optiques similaires à celles de la lentille décrite sont atteintes.

## Revendications

1.  Une lentille ophtalmique présentant une surface complexe ayant un centre géométrique (0, 0), une croix de montage (CM) située 4 mm au dessus du centre géométrique et une méridienne de progression sensiblement ombilique présentant une addition de puissance (A) supérieure ou égale à 1,5 dioptries entre un point de référence en vision de loin (VL) et un point de référence en vision de près (VP), la surface complexe ayant :

    - une valeur de cylindre normalisé à l'addition (C/A) inférieure à 0.8 dans un cercle de rayon 20 mm centré sur le centre géométrique de la lentille;
    - un rebond de la quantité sphère normalisée à l'addition (D/A) sur le cercle de rayon 20 mm centré sur le centre géométrique de la lentille inférieur à 0,04 ;
    - une longueur de progression (LP) inférieure ou égale à 14 mm, la longueur de progression étant définie comme la distance verticale entre la croix de montage (CM) et le point de la méridienne pour lequel la sphère moyenne atteint 85% de la progression de l'addition.

2.  La lentille de la revendication 1, **caractérisée en ce que** la différence de sphère moyenne sur la méridienne, entre la croix de montage (CM) du verre et le point de référence en vision de loin (VL) est inférieure ou égale à 0,06 dioptries.

3.  La lentille de la revendication 1 ou 2, **caractérisée en ce que** la méridienne de progression présente une pente maximum de la variation de la sphère normalisée à l'addition supérieure à 0,07 mm$^{-1}$.

4.  La lentille de l'une des revendications 1 à 3, **caractérisée en ce que** la surface complexe présente, au point de référence en vision de près (VP), une largeur de la zone de vision de près ($L_{VP}$) comprise entre 11 mm et 15 mm, la largeur de la zone de vision de près étant définie comme la distance, sur une ligne horizontale à 18 mm sous la croix de montage (CM), entre les lignes isocylindres égales à la moitié de l'addition (A/2).

5.  La lentille de la revendication 4, **caractérisée en ce que** la surface complexe présente, au point de référence en vision de près (VP), une largeur relative de la zone de vision définie ($LR_{VP}$) supérieure à 15 mm, la largeur relative de la zone de vision de près étant définie par la relation :

$$LR_{VP} = L_{VP} \cdot (A_{VP}/C_{VP}) \, ;$$

avec $A_{VP}$, l'addition en vision de prés, définie comme la différence entre la sphère moyenne sur la méridienne principale de progression au point de référence en vision de près (VP) et la sphère moyenne à la croix de montage (CM) ; et

avec $C_{VP}$, le cylindre maximum sur un segment horizontal passant par le point de référence en vision de près (VP) et borné par le cercle de rayon 20 mm centré sur le centre géométrique (0, 0) de la lentille.

6. La lentille de l'une des revendications 1 à 5, **caractérisée en ce que** la surface complexe présente un rapport entre :

- l'intégrale du produit du cylindre par la norme du gradient de la sphère, sur le cercle de rayon 20 mm centré sur le centre de la lentille, d'une part et
- le produit de l'aire de ce cercle, de l'addition et de la valeur maximale de la norme du gradient de la sphère sur la partie de la méridienne comprise dans ce cercle, d'autre part,

inférieur à 0,14.

7. Un équipement visuel comportant au moins une lentille selon l'une des revendications précédentes.

**Claims**

1. An ophthalmic lens having a complex surface with a geometrical centre (0, 0), a fitting cross (FC) situated 4 mm above the geometrical centre and a substantially umbilical progression meridian having a power addition (A) greater than or equal to 1.5 diopters between a far vision reference point (FV) and a near vision reference point (NV), the complex surface having:

- a cylinder value normalized to the addition (C/A) of less than 0.8 in a circle of radius 20 mm centred on the geometrical centre of the lens;
- a rebound in the sphere quantity normalized to the addition (D/A) on the circle of radius 20 mm centred on the geometrical centre of the lens of less than 0.04;
- a progression length (PL) less than or equal to 14 mm, the progression length being defined as the vertical distance between the fitting cross (FC) and the point on the meridian at which the mean sphere reaches 85 % of the progression of the addition.

2. The lens of claim 1, **characterized in that** the mean-sphere difference on the meridian, between the fitting cross (FC) of the lens and the far vision reference point (FV), is less than or equal to 0.06 diopters.

3. The lens of claim 1 or 2, **characterized in that** the progression meridian has a maximum slope of the sphere variation normalized to the addition greater than 0.07 $mm^{-1}$.

4. The lens of one of claims 1 to 3, **characterized in that** the complex surface has, at the near vision reference point, (NV), a near vision zone width ($W_{NV}$) comprised between 11 mm and 15 mm, the width of the near vision zone being defined as the distance, on a horizontal line 18 mm below the fitting cross (FC), between the isocylinder lines equal to half of the addition (A/2).

5. The lens of claim 4, **characterized in that** the complex surface has, at the near vision (NV) reference point, a relative width ($RW_{NV}$) of the defined vision zone greater than 15 mm, the relative width of the near vision zone being defined by the ratio:

$$RW_{NV} = W_{NV} \cdot (A_{NV}/C_{NV});$$

with $W_{NV}$, the near vision zone width,
with $A_{NV}$, the near vision addition, being defined as the difference between the mean sphere on the principal progression meridian at the near vision (NV) reference point and the mean sphere at the fitting cross (FC); and
with $C_{NV}$ the maximum cylinder on a horizontal segment passing through the near vision (NV) reference point and enclosed by the circle of radius 20 mm centred on the geometrical centre (0, 0) of the lens.

6. The lens of one of claims 1 to 5, **characterized in that** the complex surface has a ratio between:

- the integral of the product of the cylinder by the norm of the sphere gradient on the circle of radius 20 mm centred on the geometrical centre of the lens, on the one hand, and
- the product of the area of the circle by the addition and by the maximum value of the norm of the sphere gradient on the part of the meridian comprised within this circle, on the other hand,

being less than 0.14.

7. A visual device comprising at least one lens according to one of the preceding claims.

**Patentansprüche**

1. Ophthalmische Linse, die eine komplexe Fläche aufweist, die eine geometrische Mitte (0, 0), ein Montagekreuz (CM), das sich 4 mm über der geometrischen Mitte befindet, und einen im Wesentlichen ombilischen Fortschrittsmeridian, der eine Leistungsaddition (A) größer oder gleich 1,5 Dioptrien zwischen einem Referenzpunkt in Fernsicht (VL) und einem Referenzpunkt in Nahsicht (VP) hat, wobei die komplexe Fläche Folgendes hat:

   - einen Zylinderwert genormt zur Addition (C/A) kleiner als 0,8 in einem Kreis mit einem Radius von 20 mm, der auf die geometrische Mitte der Linse zentriert ist;
   - einen Rebound der sphärischen Menge genormt zur Addition (D/A) auf dem Kreis mit Radius von 20 mm, der auf die geometrische Mitte der Linse zentriert ist, kleiner als 0,04;
   - eine Progressionslänge (LP) kleiner oder gleich 14 mm, wobei die Progressionslänge als die vertikale Entfernung zwischen dem Montagekreuz (CM) und dem Punkt des Meridians, für den die mittlere Sphäre 85 % der Progression der Addition erreicht, definiert ist.

2. Linse nach Anspruch 1, **dadurch gekennzeichnet, dass** der mittlere Sphärenunterschied auf dem Meridian, zwischen dem Montagekreuz (CM) des Glases und dem Referenzpunkt in Fernsicht (VL) kleiner oder gleich 0,06 Dioptrien ist.

3. Linse nach Anspruch 1 oder 2, **dadurch gekennzeichnet, dass** der Progressionsmeridian eine maximale Neigung der Variation der Sphäre genormt zur Addition größer als 0,07 mm$^{-1}$ aufweist.

4. Linse nach einem der Ansprüche 1 bis 3, **dadurch gekennzeichnet, dass** die komplexe Fläche im Referenzpunkt in Nahsicht (VP) eine Breite der Nahsichtzone (L$_{VP}$) zwischen 11 mm und 15 mm aufweist, wobei die Breite der Nahsichtzone als die Entfernung auf einer horizontalen Linie zu 18 mm unter dem Montagekreuz (CM) zwischen den isozylindrischen Linien gleich der Hälfte der Addition (A/2) definiert ist.

5. Linse nach Anspruch 4, **dadurch gekennzeichnet, dass** die komplexe Fläche im Referenzpunkt in Nahsicht (VP) eine relative Breite der definierten Sichtzone (LR$_{VP}$) größer als 15 mm aufweist, wobei die relative Breite der Nahsichtzone durch die folgende Gleichung definiert ist:

$$LR_{VP} = L_{VP}(A_{VP}/C_{VP}) ;$$

wobei A$_{VP}$ die Addition in Nahsicht definiert als der Unterschied zwischen der mittleren Sphäre auf dem Hauptprogressionsmeridian im Referenzpunkt in Nahsicht VP und der mittleren Sphäre im Montagekreuz (CM) ist; und wobei C$_{VP}$ der maximale Zylinder auf einem horizontalen Segment, das durch den Referenzpunkt in Nahsicht (VP) läuft ist und von dem Kreis mit Radius 20 mm, der auf der geometrischen Mitte (0, 0) der Linse zentriert ist, begrenzt ist.

6. Linse nach einem der Ansprüche 1 bis 5, **dadurch gekennzeichnet, dass** die komplexe Fläche ein Verhältnis zwischen:

   - der Integralen des Produkts des Zylinders mit der Norm des Gradienten der Sphäre auf dem Kreis mit Radius 20 mm, der auf der Mitte der Linse zentriert ist, einerseits, und
   - dem Produkt der Fläche dieses Kreises, der Addition und des maximalen Werts der Norm des Gradienten der Sphäre auf dem Teil des Meridians, der in diesem Kreis enthalten ist, andererseits,

kleiner als 0,14 aufweist.

**7.** Sichtausstattung, die mindestens eine Linse nach einem der vorhergehenden Ansprüche aufweist.

Figure 1

Figure 2

Figure 3

Figure 4

Figure 5

Figure 6

Houteur (mm)

Figure 7

Figure 8

Figure 9

Figure 10

Figure 11

Figure 12

Figure 13

Figure 14

Figure 15

Figure 16

**RÉFÉRENCES CITÉES DANS LA DESCRIPTION**

**Documents brevets cités dans la description**

- FR 2699294 A
- US 5270745 A
- US 5272495 A
- FR 2683642 A
- FR 2704327 A
- FR 2588973 A
- FR 2769997 A
- FR 2769999 A
- FR 2807169 A